# EUROPEAN PATENT APPLICATION

(11) **EP 1 767 838 A1**
(43) Date of publication of application: **28.03.2007**
(21) Application number: 05748718.3
(22) Date of filing: 07.06.2005
(51) Int. Cl.: F16J 15/32, F15B 15/14

(54) **SEALING SYSTEM**

(30) Priority: 07.06.2004 JP 2004168040
(71) Applicant: NOK Corporation, Minato-ku Tokyo 105-8585 (JP)
(72) Inventor: MATSUI, Noriyuki, c/o NOK CORPORATION, Nihonmatsu-shi, Fukushima 9648533 (JP)
(74) Representative: TBK-Patent
(86) International application number: PCT/JP2005/010429
(87) International publication number: WO 2005/121613

(57) **Abstract**

A sealing system in which, even if the system is subjected to pressure variation, a buffer ring has stable behavior, enabling the system to always exhibit excellent sealing performance. A buffer ring (B) has a greater cross-section than a rod packing (R). The greater cross-section provides the ring with increased rigidity and a greater interference to stabilize behavior of the ring caused by pressure variation, restricting the slide surface of the ring from separating from a rod (5). The buffer ring is composed of a U-packing (2) where the edge of a lip head (9) of an inner circumferential lip section (6) is rounded to reduce a maximum contact pressure gradient and of a backup ring (4) in contact with an inner circumferential heel section (3) of the U-packing (2) to protect the heel section (3).

## Description

### TECHNICAL FIELD

The invention relates to a sealing system such as rod sealing system applied in hydraulic cylinder or the like use as actuator of, for example, construction machine or transporting vehicle.

### BACKGROUND ART

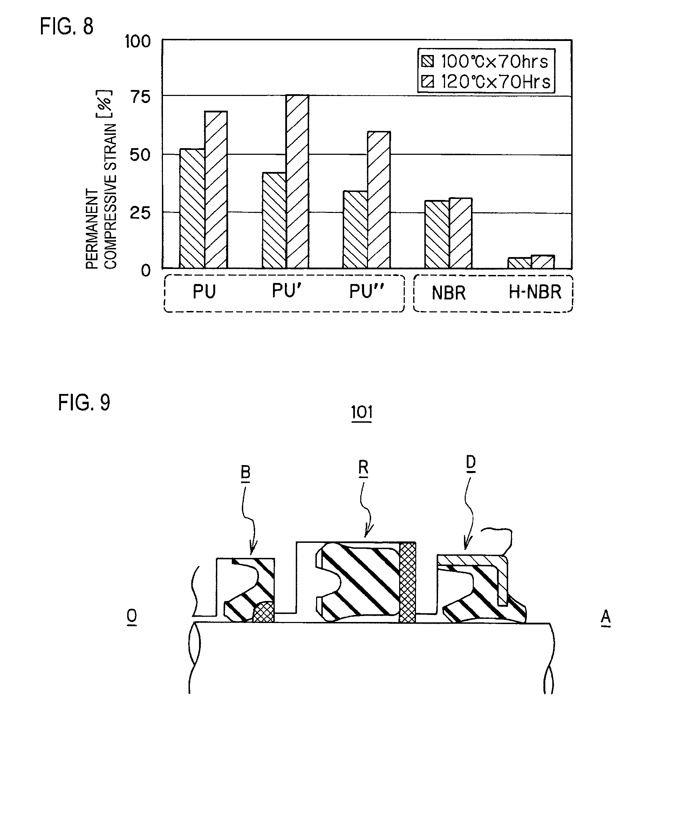

As a typical sealing system, a rod sealing system used in hydraulic cylinder or the like is known. A rod sealing system mainly includes, as shown in FIG. 9, a rod packing R for preventing leak of hydraulic oil to outside, a buffer ring B installed at the oil pressure side O (fluidpressure side) of rodpackingR for enhancing the durability of rod packing R by absorbing impact pressure or pressure variations at high load, or preventing hydraulic oil of high temperature from flowing into the rod packing R side, and a dust seal D for preventing invasion of external muddy water or dust at the outer side A of rod packing R.

In this rod sealing system 101, recently, there is an increasing need for higher temperature of operating environment (maximum 120°C) or longer service life, and it is proposed to use buffer ring B made of heat resistant urethane material as disclosed in patent document 1. In the rod sealing system 101 disclosed in patent document 1, fatigue life of buffer ring B is extended, and load of rod packing R is suppressed by maintenance of performance of buffer ring B, and the life of rod packing R is extended, so that the life of the entire rod sealing system 101 may be longer.
[Patent document 1] Japanese Patent Application Laid-Open No. 2001-355739

### DISCLOSURE OF THE INVENTION

### PROBLEMS TO BE SOLVED BY THE INVENTION

In the rod sealing system 101 of patent document 1, although the life may be extended, problems may occur in the following situation.

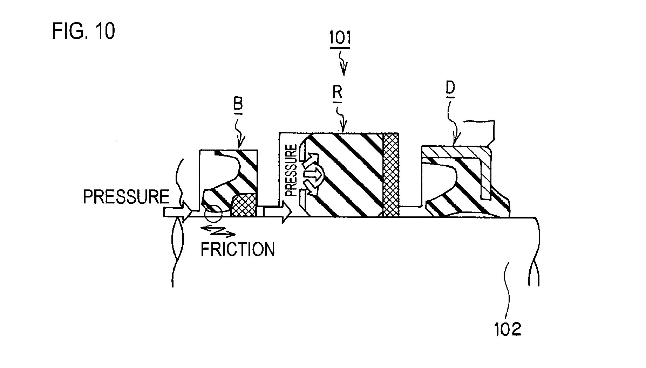

If repeated pressures occur very often, for example, when the breaker is used as attachment in place of bucket in shovel works of construction machine, pressure variations of about 10 to 30 Hz are applied to the rod sealing system 101. In this case, reciprocal motion is accompanied by small strokes, and deformation and recovery of buffer ring B by pressure are repeated, and behavior of buffer ring B becomes unstable, and instability of behavior is further promoted by friction, and the inner peripheral lip section of the buffer ring B cannot follow up pressure variations, and momentarily, as shown in FIG. 10, the sliding surface is departed from the rod 102, and a gap is formed between the buffer ring B and rod 102, and high pressure is directly applied to the rod packing R (blowing of hydraulic pressure). When high pressure is directly applied to the rod packing R repeatedly in such manner, the rod packing R is damaged, worn and exhausted, and the sealing performance of rod packing R is lowered, possibly resulting in oil leaks and other troubles.

In usual operations of construction machines such as shovel and wheel loader, if excavation or unloading operation of sand and soil is very often continuously, same as mentioned above, pressure variations are applied to the rod sealing system 101, and similar problems may occur.

The invention is devised in the light of such background, and it is hence an object thereof to present a sealing system stable in behavior of buffer ring and capable of exhibiting sealing performance all the time if pressure variations are applied to the sealing system.

### MEANS FOR SOLVING THE PROBLEMS

To achieve the object, the invention provides a sealing system comprising a buffer ring, a main seal, and a dust seal disposed sequentially from the fluid pressure side to the outer side, in an annular gap between two members moving reciprocally,
wherein the buffer ring,
having a greater cross-section than the main seal so as to be capable of suppressing departure of sliding surface from the object member of sliding, by increasing rigidity and securing a large tightening allowance to stabilize behavior due to pressure variations, is composed of
a U-packing rounded on the edge of lip head of sliding side lip and reduced in maximum contact pressure gradient, and a backup ring abutting against the sliding side heel portion of the heel section of the U-packing for protecting the sliding side heel portion.

It is preferable that the heel section of U-packing of the buffer ring is characterized by its length in axial direction occupying 40 to 90% of entire length in axial direction of the U-packing.

### EFFECTS OF THE INVENTION

According to the invention, if pressure variations are applied to the sealing system, the behavior of buffer ring is stable, and satisfactory sealing performance is always exhibited.

### BRIEF DESCRIPTION OF THE DRAWINGS

FIG. 1 is a half sectional view of rod sealing system according to a first embodiment;
FIG. 2 is a half sectional view of buffer ring according to the first embodiment;
FIG. 3 is a half sectional view of behavior in pressure variations of buffer ring according to the first embodiment;
FIG. 4 is a diagram of test results of durability of use of buffer ring in different sectional sizes according to the first embodiment;
FIG. 5 is a half sectional view of rod sealing system according to a second embodiment;
FIG. 6 is a half sectional view of buffer ring according to the second embodiment;
FIG. 7 is a diagram of comparative test results of sliding heat generation of buffer ring with different lip heads according to the second embodiment;
FIG. 8 is a diagram comparing material and permanent compressive strain of buffer ring according to a third embodiment;
FIG. 9 is a half sectional view of rod sealing system in related art; and
FIG. 10 is a half sectional view showing problems of rod sealing system in related art.

### DESCRIPTION OF REFERENCE NUMERALS

- 1: Rod sealing system
- 2: U-packing
- 3: Inner peripheral heel portion
- 4: Backup ring
- 5: Rod
- 6: Inner peripheral lip section
- 7: Outer peripheral lip section
- 8: Mounting groove
- 9: Lip head
- 10: Cylinder
- 11: U-packing
- 12: Inner peripheral lip section
- 13: Outer peripheral lip section
- 14: Mounting groove
- 15: Backup ring
- 16: Mounting groove
- 17: Oil lip
- 18: Dust lip
- 19: Metal ring
- 20: Inwardly extending flange section
- 21: Microprotrusion
- 22: U-packing
- 23: Inner peripheral lip section
- 24: Outer peripheral lip section
- B: Buffer ring
- R: Rod packing
- D: Dust seal

### BEST MODE FOR CARRYING OUT THE INVENTION

### (First embodiment)

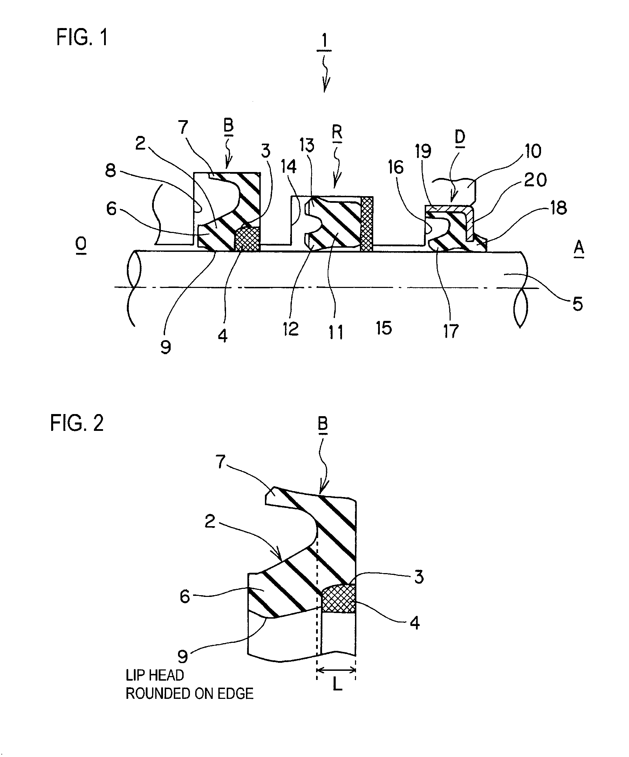

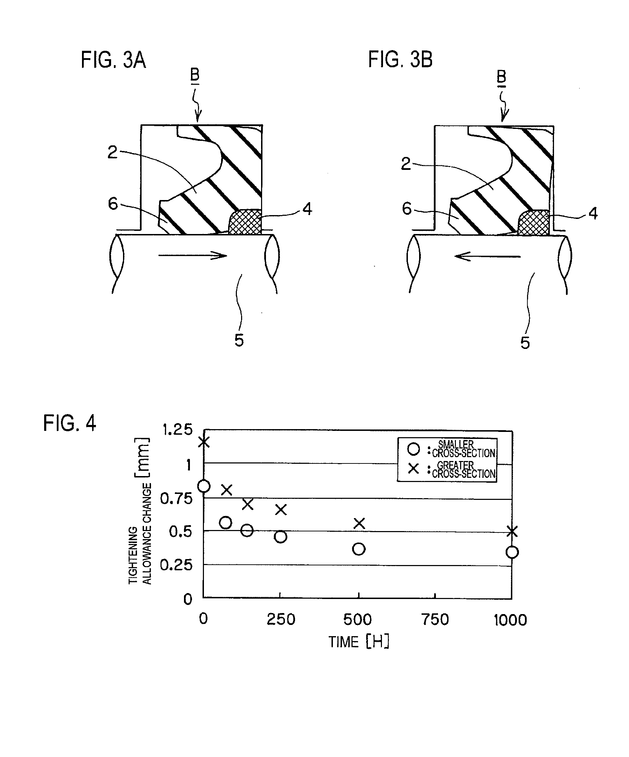

Referring now to FIG. 1 to FIG. 4, a first embodiment is described. FIG. 1 is a half sectional view of rod sealing system according to the first embodiment. FIG. 2 is a half sectional view of buffer ring according to the first embodiment. FIG. 3 is a half sectional view of behavior in pressure variations of buffer ring according to the first embodiment. FIG. 4 is a diagram of test results of durability of use of buffer ring in different sectional sizes according to the first embodiment.

The rod sealing system 1 in FIG. 1 includes a rod packing R as main seal for preventing leak of hydraulic oil to outside, a buffer ring B installed at the oil pressure side O at fluid pressure side of rod packing R for enhancing the durability of rod packing R by absorbing impact pressure or pressure variations at high load, or preventing hydraulic oil of high temperature from flowing into the rod packing R side, and a dust seal D for preventing invasion of external muddy water or dust at the outer side A of rod packing R.

In the rod sealing system 1, the buffer ring B, rod packing R, and dust seal D are disposed sequentially from the oil pressure side O toward the outer side A.

The buffer ring B is composed of a U-packing 2 of polyurethane rubber (hereinbelow, referred to as PU) excellent in tensile strength, wear resistance and hydraulic resistance, and a backup ring 4 of polyamide resin (hereinbelow, referred to as PA) to be fitted into the inner peripheral heel portion 3 as sliding side heel portion of the heel section of the U-packing 2.

This buffer ring B has a greater cross-section than the rod packing R, and the cross-section area ratio is about 1.5 times of rod packing R (refer to FIG. 1). Herein, the cross-section refers to the cross-section defined by a plane including the central line of the axis. As described later, by this cross-section, the rigidity of the buffer ring B is enhanced, and a large tightening allowance is provided, and behavior by pressure variations is stabilized, and separation of slide surface from the rod 5 is restricted. The "tightening allowance" is a dimensional difference between diameter of groove bottom of mounting groove 8 and outer diameter of buffer ring B, and "enhancement of rigidity" means enhancement of capacity resisting deformation by external force. In this embodiment, the outer diameter ratio of buffer ring B is about 1.5 times of rod packing R, but not limited to this, the outer diameter ratio of buffer ring B may be somewhere within a range of more than 1 times to 2 times or less of the rod packing R. That is, when the outer diameter is larger than the rod packing R, these effects are obtained, or the outer diameter is larger than 2 times of the rod packing R, it cannot be integrally fitted into the mounting groove 8.

The U-packing 2 of buffer ring B has an inner peripheral lip section 6 and an outer peripheral lip section 7 shorter in axial length than the inner peripheral lip section 6, and is installed in the mounting groove 8 of cylinder inner periphery with the head of inner peripheral lip section 6 and the head of outer peripheral lip section 7 facing the oil pressure side O. The heel section for supporting the inner peripheral lip section 6 and outer peripheral lip section 7 is provided so that its axial length may occupy 40 to 90% of entire axial length of the U-packing 2. The axial length of heel section is the length in axial direction (L in FIG. 2) from the groove bottom of U-groove between the inner peripheral lip section 6 and outer peripheral lip section 7 to the outer side end section (the end section contacting with the side face of mounting groove 8) . As the volume of heel section increases in the U-packing 2, the rigidity of the heel section supporting the inner peripheral lip section 6 and outer peripheral lip section 7 is further enhanced, and the following performance of inner peripheral lip section 6 to the rod 5 is improved, so that the behavior of buffer ring B may be stabilized.

As shown in FIG. 2, the lip head 9 where the contact pressure is highest between the inner peripheral lip section 6 and rod 5 is rounded on the edge and decreased in maximum contact pressure gradient. When the maximum contact pressure gradient is smaller, the oil film formed by the U-packing 2 is increased in thickness as understood from the fluid lubrication reverse theory.

In the U-packing 2 of buffer ring B, since the outer peripheral lip section 7 is shorter in axial length than the inner peripheral lip section 6, when the oil pressure is collected between the buffer ring B and rod packing R, if the buffer ring B is shifted to the oil pressure side O in the mounting groove 8 provided in the inner periphery of cylinder 10, the inner peripheral lip section 6 contacts with the side surface on the oil pressure side O of mounting groove 8, but the outer peripheral lip section 7 does not contact with the side surface, and a fluid passage across the bottom side of the mounting groove 8 is formed, so that the oil pressure collected between the buffer ring B and rod packing R can be released to the U-groove of the U-packing 2.

The material of U-packing 2 of buffer ring B is PU composition, such as polyol, diisocyanate, and chain extender, and in particular, PU composition containing heat resistant polyol or heat resistant diisocyanate is preferred. Such heat resistant polyol includes hexadiol adipate ester and carbonate ester, and the heat resistant diisocyanate includes orthotridine isocyanate and paraphenylene diisocyanate.

The material for U-packing 2 of buffer ring B is, for example, a thermoplastic polyurethane formed product obtained by reaction of (A) high molecular weight diol of number-average molecular weight of 500 to 6000, (B) aromatic diisocyanate, and (C) low molecular weight diol as chain extender, at NCO/OH ratio of 0.95 to 1.20. Such thermoplastic polyurethane is manufactured by diisocyanate polyaddition reaction of high molecular weight glycol (long chain glycol) having end active hydrogen and low molecular weight diol (short chain glycol) as chain extender. High molecular weight glycol includes polyester polyol, polyether polyol, acrylic polyol, silicone polyol, 1,4-polybutadiene polyol, 1,2-polybutadiene polyol, phenolic polyol, flame retardant polyol, and castor oil polyol of number-average molecular weight of about 500 to 6000, preferably about 1000 to 3000. Among them, preferred examples of polyester polyol include condensation reaction product of adipic acid, isophthalic acid, terephthalic acid, and other dicarboxylic acids, with ethylene glycol, propylene glycol, diethylene glycol, butylene glycol, 1, 6-hexanediol, trimethylol propane, neopentyl glycol, and other polyols, polycaprolactone polyol, and polycarbonate polyol. Polyether polyol includes polyol of polypropylene glycol system, its ethylene oxide denatured product, amine denatured product, and polyoxy tetramethylene glycol. These polyol components are contained by 30 to 90 wt.% of total amount of three components (A), (B) and (C), or preferably 40 to 70 wt.%, and if contained less, the forming performance is poor, and if exceeding, heat resistance or permanent compressive strain resistance is lowered. Examples of (B) aromatic diisocyanate are orthotridine isocyanate, paraphenylene diisocyanate, etc. Examples of (C) chain extender are 1,4-butane diol, 1,6-hexane diol, 2,3-butane diol, 1,4-bis (beta-hydroxy ethoxy) benzene, p-xylilene glycol, glycerin monoallyl ether, dimethylol dihydropyran, other one or two or more glycols contained by 1 to 60 wt.% of total amount of three components (A), (B) and (C), preferably 5 to 40 wt.%, and if contained more, the forming performance is poor, and if contained less, heat resistance or permanent compressive strain resistance is lowered. In polyurethane forming reaction by using these components, the NCO/OH ratio of NCO group of organic diisocyanate and OH group of high molecular diol and low molecular weight diol of chain extender is 0.95 to 1.20, or preferably 1.05 to 1.10. When out of this range, molecular weight of produced polyurethane is lowered, or secondary reaction by excessive isocyanate group or hydroxy group takes place, and the physical properties are lowered. During reaction, as required, tin compound or amine compound may be added as catalyst, or filler, metal oxide, metal hydroxide, lubricant or others may be properly blended. These components are formed in specified U-packing shape of buffer ring B by injection forming machine or extrusion forming machine by one shot method or prepolymer method.

The backup ring 4 of buffer ring B is not particularly specified in shape or material as far as protrusion of inner peripheral heel portion 3 of heel section of U-packing 2 can be prevented at the time of application of high pressure, and it may be a plain washer provided adj acently to the outer side A of U-packing 2, and material includes nylon 46, nylon 66, nylon 6, etc.

The rod packing R is U-packing 11 made of nitrile rubber (hereinbelow, referred to as NBR) or nitrile rubber hydroxide (hereinbelow, referred to as H-NBR). The U-packing 11 has the inner peripheral lip section 12 and outer peripheral lip section 13 equal in length in axial direction, and same as the U-packing 2 of buffer ring B, it is fitted into the mounting groove 14 on inner periphery of cylinder 10 with the head of inner peripheral lip section 12 and head of outer peripheral lip section 13 facing the oil pressure side O.

The head of inner peripheral lip section 12 and head of outer peripheral lip section 13 of the U-packing 11 have notched provided on the circumference at equal intervals for removing the oil pressure collected between the rod packing R and dust seal D to the oil pressure side O thereby avoiding accumulated pressure. If oil pressure is collected between the rod packing R and dust seal D, when the rod packing R is shifted to the oil pressure side O, in the mounting groove 14 provided in the inner periphery of cylinder 10, the inner peripheral lip section 12 and outer peripheral lip section 13 contact with the oil pressure side O side surface of the mounting groove 14, but since notches form a fluid passage, the oil pressure collected between the rod packing R and dust seal D can be released to the oil pressure side O of the rod packing R.

The backup ring 15 of polyethylene tetrafluoride (hereinbelow, referred to as PTFE) of plain washer is fitted adjacently to the outer side A of the U-packing 11. By the use of this backup ring 15, if high oil pressure is applied to the U-packing 11, protrusion of inner peripheral heel portion of the heel section of U-packing 11 can be prevented, and pressure resistance of rod packing R can be further enhanced.

The dust seal D is fitted into the mounting groove 16 of the inner periphery of cylinder 10, and an oil lip 17 of PU excellent in tensile strength and wear resistance provided at the oil pressure side O and a dust lip 18 provided at the outer side A slide on the rod 5, and a metal ring 19 is baked and fixed to the outer section fitted to the mounting groove 16. The metal ring 19 has an inwardly extending flange section 20 at the outer side A.

The structure of dust seal D is not limited to this example, and when applied in a hydraulic cylinder used as actuator of construction machine or transportation vehicle, for example, since a high load is applied also to the dust seal D, it is preferred to employ a rigid structure having the outer fitting portion reinforced by metal ring 19.

In the rod sealing system 1 having such constitution, the buffer ring B is larger in outer shape than in related art, and has a greater cross-section. The outer diameter of buffer ring B including U-packing 2 and backup ring 4 is about 1.5 times of rod packing R. Since the cross-section is greater, the parts are greater in thickness and higher in rigidity, and the tightening allowance is increased and sufficient. By the increase of rigidity, the inner peripheral lip section 6 is hardly deformed, and the position can be maintained stably. In addition, assuring a large tightening allowance, tightness of seal is maintained, and the inner peripheral lip section 6 continues to slide. Further, the heel section supporting the inner peripheral lip section 6 and outer peripheral lip section 7 is provided so that its length in axial direction may occupy 40 to 90% of entire length in axial direction of the buffer ring B. Thus, since the volume of heel section in the entire buffer ring B is great, the rigidity of the heel section supporting the inner peripheral lip section 6 and outer peripheral lip section 7 is further increased, and the following performance of inner peripheral lip section 6 to the rod 5 is improved, and behavior of buffer ring B can be stabilized. Therefore, as explained in the background art, for example, when a breaker is used as attachment instead of bucket in shovel work of construction machine, in ordinary operations of construction machine such as shovel or wheel loader, if the working frequency of excavation or soil loading and unloading is very high continuously, pressure variations of about 10 to 30 Hz are applied to the rod sealing system 1, and even in the case of reciprocal motions accompanied by small strokes, as shown in FIG. 3, deformation or restoration of buffer ring B by pressure is not changed largely, and the buffer ring B always slide on the rod 5 continuously, and the behavior of buffer ring B is stable (in FIG. 3A, almost no deformation is noted by move of rod 5 to outer side A, and in FIG. 3B, by move of rod 5 to oil pressure side O, only the backup ring 4 is departed from the groove side surface of mounting groove 8, and the U-packing 2 remains sliding). If friction occurs at the same time, stability of behavior of buffer ring B is not disturbed. Thus, since the behavior of buffer ring B is stable, the sliding surface of buffer ring B is not departed from the rod 5 even for a moment, and gap is not formed between the buffer ring B and rod 5, and therefore high pressure is not directly applied to the rod packing R (oil pressure is not blown out). Accordingly, high pressure is not applied directly to the rod packing R, and the rod packing R is not damaged, and wear and exhaust can be suppressed, sealing performance of rod packing R is maintained, and oil leak or other troubles do not occur. Still more, the rod sealing system 1 always exhibits sealing performance. As shown in FIG. 4, as compared with the conventional buffer ring of small cross-section (indicated by blank circle), the buffer ring of the embodiment having greater cross-section (indicated by x-mark) is always excellent in change of tightening allowance in the course of time, and is hence durable for a long period, and excellent sealing performance is exhibited continuously as compared with the related art. FIG. 4 shows results of durability test at temperature of 80°C and rod diameter of 75 mm.

Herein, when the buffer ring B has a greater cross-section, the contact area with the rod 5 is increased, and the sliding heat generation may be increased. By contrast, in the embodiment, since the lip head 9 of inner peripheral lip section 6 is rounded on the edge, and a maximum contact pressure gradient is slightly provided, as understood from the fluid lubrication reverse theory, the oil film formed by the U-packing 2 is increased in thickness, and the thick oil film improves wear resistance in sliding, and it is effective to reduce sliding heat generation.

### (Second embodiment)

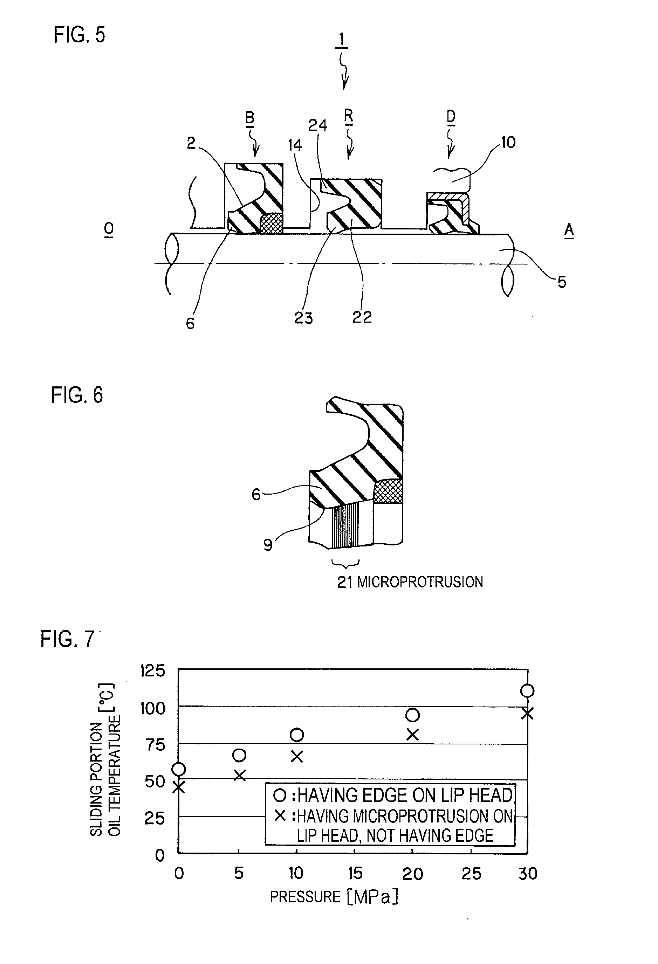

Referring now to FIG. 5 to FIG. 7, a second embodiment is described. FIG. 5 is a half sectional view of rod sealing system according to the second embodiment. FIG. 6 is a half sectional view of buffer ring according to the second embodiment. FIG. 7 is a diagramof comparative test results of sliding heat generation by difference in lip head of buffer ring according to the second embodiment.

The rod sealing system 1 in FIG. 5 is nearly same as in FIG. 1. Explanation of same parts as in the first embodiment is omitted, and only different points from the first embodiment are described below.

In the U-packing 2 of the buffer ring B, as shown in FIG. 6, the lip head 9 highest in contact pressure between the inner peripheral lip section 6 and rod 5 is rounded on the edge, and the maximum contact pressure gradient is reduced. In addition, the sliding surface of the inner peripheral lip section 6 has a plurality of microprotrusions 21 for enhancing the oil film retaining capacity. Accordingly, since the maximum contact pressure gradient is small, as understood from the fluid lubrication reverse theory, the oil film formed by the U-packing 2 is increased in thickness, and the oil film is held among microprotrusions 21, and the oil film holding capacity is increased.

The rod packing R is a U-packing 22 made of PU. The U-packing 22 is formed shorter in axial direction in the inner peripheral lip section 23 as compared with outer peripheral lip section 24, and same as the U-packing 2 of buffer ring B, it is fitted into the mounting groove 14 on inner periphery of cylinder 10 with the head of inner peripheral lip section 23 and head of outer peripheral lip section 24 facing the oil pressure side O. The head of inner peripheral lip section 23 and head of outer peripheral lip section 24 of this U-packing 22 are not provided with notches for avoiding accumulated pressure. Or, as shown in FIG. 1, backup ring like plain washer is not disposed.

In this embodiment, backup ring is not provided in the rod packing R, and the number of parts is curtailed, and the design is compact.

In the rod sealing system 1 having such configuration, same as in the first embodiment, the buffer ring B is larger and has a great cross-section, and hence same effects are obtained. Besides, the lip head 9 of the inner peripheral lip section 6 is rounded on the edge, and the maximum contact pressure gradient is slightly provided, and in addition, the sliding surface of the inner peripheral lip section 6 has a plurality of microprotrusions 21, and as understood from the fluid lubrication reverse theory, the oil film formed by the U-packing 2 is increased in thickness, and the oil film is held among microprotrusions 21, and the oil film holding capacity is increased, and the oil film can be held stably and longer, and the thick and stable oil film improves the wear resistance in sliding, and sliding heat generation can be reduced more preferably than in the first embodiment. Still more, since a thick oil film is maintained, the exhaust life and wear life of buffer ring B can be extended. As shown in FIG. 7, as compared with the conventional buffer ring having edge at the lip head (indicated by blank circle), the buffer ring of the embodiment (indicated by x-mark) not having edge on the lip head 9 and having microprotrusions 21 on the lip sliding surface is always low in sliding part oil temperature if pressure is high, and if the pressure is elevated, the sliding heat generation is always kept lower than in the related art. FIG. 7 shows results of sliding heat generation comparative test in the sliding condition of rod diameter of 75 mm, speed of 400 mm/sec, and stroke of 1 m, using Daphne Super Hydro #46 oil (manufacture by Idemitsu).

### (Third embodiment)

Next, a third embodiment is explained. The rod sealing system 1 of the embodiment is similar to the second embodiment in the shape of seal members. What is different is that H-NBR is used as the material for buffer ring B.

FIG. 8 is a diagram comparing material and permanent compressive strain of buffer ring according to the third embodiment. That is, in FIG. 8, PU, PU', PU" are individually different materials of PU, and these PU materials and permanent compressive strain of H-NBR of the embodiment are compared. NBR is presented as comparison with other materials.

In the second embodiment, sliding heat generation is reduced, and exhaust life and wear life of buffer ring B are extended. As a result, by decreasing the maximum contact pressure gradient by rounding the edge of lip head, the oil film is increased in thickness, lubricity is maintained, and wear is suppressed. Or by increasing the cross-section, the rigidity can be enhanced. Therefore, as shown in FIG. 8, as compared with PU, H-NBR inferior in material strength but very excellent in heat resistance can be used in buffer ring B. As in this embodiment, by using H-NBR in the buffer ring B, the exhaust life can be further extended than in the second embodiment.

## Claims

1. A sealing system comprising a buffer ring, a main seal, and a dust seal disposed sequentially from the fluid pressure side to the outer side, in an annular gap between two members moving reciprocally,
wherein the buffer ring,
having a greater cross-section than the main seal so as to be capable of suppressing departure of sliding surface from the object member of sliding, by increasing rigidity and securing a large tightening allowance to stabilize behavior due to pressure variations, is composed of
a U-packing rounded on the edge of lip head of sliding side lip and reduced in maximum contact pressure gradient, and a backup ring abutting against the sliding side heel portion of the heel section of the U-packing for protecting the sliding side heel portion.

2. The sealing system of claim 1, wherein the heel section of U-packing of the buffer ring is **characterized by** its length in axial direction occupying 40 to 90% of entire length in axial direction of the U-packing.
